# EUROPÄISCHE PATENTSCHRIFT

(11) **EP 2 346 127 B1**
(45) Veröffentlichungstag und Bekanntmachung des Hinweises auf die Patenterteilung: **26.07.2017**
(21) Anmeldenummer: 11150809.9
(22) Anmeldetag: 13.01.2011
(51) Int. Cl.: H02B 13/02, H02B 1/38, H02B 1/28, H02B 13/025

(54) **Mittelspannungs-Schaltanlage**
Medium voltage switching assembly
Installation de commutation à tension moyenne

(30) Priorität: 19.01.2010 DE 202010001066 U
(43) Veröffentlichungstag der Anmeldung: 20.07.2011
(73) Patentinhaber: Greiner Schaltanlagen GmbH, 67304 Kerzenheim (DE)
(72) Erfinder: Fachenbach, Bernd, 67304, Kerzenheim (DE)
(74) Vertreter: Katscher Habermann Patentanwälte

(56) Entgegenhaltungen:
- AT-U1- 2 759
- DE-A1- 3 412 612
- DE-A1- 4 312 025
- DE-C1- 19 700 440
- JP-A- S56 101 308
- JP-U- S59 129 310
- US-A1- 2003 151 337

## Beschreibung

Die Erfindung betrifft luftisolierte Mittelspannungs-Schaltanlagen aus modular zusammenstellbaren und miteinander verbindbaren metallisch gekapselten und geschotteten Feldern mit jeweils einem schrankartigen Gehäuse aus Metallblech, in dem jeweils eine Anzahl von unterschiedlichen Funktionseinheiten zugeordnete getrennte, zumindest zum Teil frontseitig offene Räume gebildet sind, die durch jeweils zugeordnete, vom Bedienungspersonal gesondert zu öffnende oder zu schließende, verschwenkbar im Gehäuse angelenkte metallische Türflügel zugänglich sind.

Derartige luftisolierte Mittelspannungs-Schaltanlagen werden bei der Realisierung der Verteilung elektrischer Energie universell in der Industrie, in öffentlichen Gebäuden und der Chemie sowie in Energieversorgern bis 24 kV, 25 kA und 12 kV, 31,5 kA eingesetzt. Je nach den anfallenden Verteilungs- und Schaltaufgaben werden die Anlagen modular aus schrankartigen metallisch gekapselten und geschotteten Feldern zusammengestellt, in denen jeweils unterschiedliche Funktionen zugeordnete Räume gebildet sind. Eines dieser in jedem Feld gebildeten Räume ist der Sammelschienenraum, welcher im rückwärtigen oberen Bereich jedes Feldes vorgesehen ist und der im Fall von dreiphasigen Systemen von drei voneinander beabstandeten luftisolierten Sammelschienen in Querrichtung horizontal durchsetzt wird. Die Sammelschienen sind elektrisch mit den Sammelschienen benachbarter Felder verbunden, wobei sie im Bereich der elektrisch geschotteten Seitenwände durch isolierte Öffnungen hindurchgeführt sind.

Weitere durch an der Vorderseite vorgesehene, mit verschwenkbaren Türflügeln verschließbare Räume sind beispielsweise ein Kabelanschlussraum, ein Leistungsschalterraum und ein Niederspannungsraum, in denen in den entsprechenden Funktionen zugeordnete Schalt- oder Verteilereinheiten oder Armaturen bzw. Anschlüssen angeordnet sind. Derartige Schaltanlagengehäuse sind beispielsweise in JP S59 129 310 U oder DE 197 00 440 C1 beschrieben.

Zur schnellen Montage oder zum Austausch von elektrischen Leistungsschaltern, Lasttrennschaltern, Schützen oder anderen elektrischen Einheiten bzw. zur Herstellung von elektrischen Verbindungen sind die Türflügel ihrerseits in störlichtbogensicherer Ausführung hergestellt und mit Türverschlüssen versehen, die einen komfortablen Zugang zum Leistungsschalterraum, Kabelanschlussraum und Niederspannungsraum ermöglichen. In JP S56 101308 A wird eine Schaltanlage mit einem schrankartigen Gehäuse und mit einer schwenkbar gelagerten Tür beschrieben, die mit einem Verriegelungsmechanismus in einer Schließstellung verriegelt werden kann.

Bei derartige Schaltanlagen müssen hohe Sicherheitsanforderungen erfüllt und die Bedienungssicherheit gewährleistet werden. Aus AT 2 759 U1 ist eine Schaltanlage mit einem Verriegelungsmechanismus für einen schwenkbar an dem Gehäuse gelagerten Türflügel bekannt, wobei der Verriegelungsmechanismus labyrinthartig ausgestaltete Bestandteile aufweist und gleichzeitig eine Störlichtbogensicherung bewirken soll. Ähnliche Schaltanlagen sind aus der DE 43 12 025 A1 und DE 34 12612 A1 bekannt. Der Erfindung liegt die Aufgabe zugrunde, bei Mittelspannungs-Schaltanlagen der hier in Frage stehenden Art die Türflügel und ihre Anordnung am jeweiligen Gehäuse derart auszubilden, dass sie bei Verbesserung der Sicherheit für das Bedienungspersonal ein komfortabler und einfacher Zugang zu den in den Feldern gebildeten Räumen geschaffen wird.
Ausgehend von einer Mittelspannungs-Schaltanlage der eingangs erwähnten Art, wird diese Aufgabe erfindungsgemäß dadurch gelöst, dass die Türflügel und das Gehäuse in den sich in der Schließstellung jeweils gegenüberstehenden Randbereichen voneinander beabstandete parallel verlaufende, abwechselnd rechtwinklig von den Innenseiten der jeweiligen Türflügelrandbereichen und den die Türflügelöffnung im Gehäuse umschließenden Gehäusestirnflächenbereichen vortretende, umlaufende metallische Leisten vorgesehen sind, welche in der Türflügelschließstellung für den jeweiligen Raum eine umlaufende Störlichtbogensicherung nach Art einer Labyrinthdichtung bilden, dass in dem dem schwenkbaren am Gehäuse angelenkten Rand des jeweiligen Türflügelflügels gegenüberliegenden Türflügel-Randbereich zu den das Labyrinth bildenden vortretenden Leisten nach außen versetzt eine um einen vorgegebenen Weg längsverschiebliche Trägerschiene für eine Anzahl von in Schienenlängsrichtung zueinander versetzte Verriegelungsbolzen angeordnet ist, welche durch eine auf der Außenseite des Türflügelflügels angeordnete mit der Trägerschiene gekoppelte Handhabe zwischen den Endpositionen des vorgegebenen Verschiebungswegs verschiebbar ist, und dass im zugeordneten Stirnflächenbereich des Gehäuses eine der Anzahl und dem Abstand der Verriegelungsbolzen entsprechende Anzahl von Bolzenaufnahmen derart positioniert angeordnet sind, dass die Verriegelungsbolzen in der einen Verschiebungsendstellung der Trägerschiene in die zugeordneten Bolzenaufnahmen eingreifen, in der anderen Verschiebungsendstellung jedoch aus dem Eingriff mit die zugeordneten Bolzenaufnahmen zurückgezogen sind. Das Öffnen und Schließen des Türflügels kann somit einfach und schnell durch Ergreifen und Betätigen der Handhabe erfolgen. Da die von den vom Türflügel- und vom Gehäuse-Randbereich vortretenden die störlichtbogensichere Labyrinthdichtung bildenden metallischen Leisten gegenüber der mit den Verriegelungsbolzen versehenen Trägerschiene in Richtung zum Gehäuse-Innenraum versetzt angeordnet sind. Ist auch die geforderte Sicherheit für die den Türflügel öffnende bzw. schließende Bedienungsperson gewährleistet.

Dabei ist die Ausgestaltung vorzugsweise so getroffen, dass die mit den Verriegelungsbolzen versehene Trägeschiene in einer im Querschnitt im Wesentlich U-förmigen langgestreckten Halterungsschiene längsverschieblich angeordnet ist, welche mit ihrer zwischen U-Schenkeln gebildeten offenen Seite in der Türflügel-Schließstellung zum Gehäuse weisend an dem dem schwenkbar im Gehäuse gelagerten Rand des Türflügels gegenüberliegenden Rand des Türflügels angeordnet ist.

Die Halterungsschiene erstreckt sich vorzugsweise über die gesamte Länge des Rand des Türflügels, wobei auf der bei geschlossenem Türflügel vom Gehäuse wegweisenden Außenfläche des Stegs der Halterungsschiene die langgestreckte ebenartige Handhabe zwischen zwei Endstellungen beweglich angeordnet und getrieblich mit der Trägerschiene gekoppelt ist. Durch diese Ausgestaltung ist es möglich, die Länge der Trägerschiene so zu bemessen, dass sie sich ihrerseits über den den größten Teil der Länge des Türflügelrands erstreckt, wodurch die Anordnung von mehreren über die Längserstreckung der Trägerschiene verteilt angeordneten Verriegelungsbolzen ist, die in der Schließstellung in die zugeordneten Bolzenaufnahmen eingreifen, d. h. der geschlossene Türflügel wird in der Schließstellung mehrfach in voneinander entfernten Bereichen verriegelt.

Die langgestreckte Handhabe kann dabei auf der Halterungsschiene längsverschieblich angeordnet und durch einen Längsschlitz in der Stegfläche hindurch mit der Trägerschiene verbunden sein, wobei dann die Länge des Längsschlitzes entsprechend dem vorgegebenen Verschiebungsweg der Trägerschiene zwischen deren Endposition bemessen ist. Die Ver- bzw. Entriegelung des Türflügels erfolgt dann also ausschließlich durch translatorische Verschiebung der mit der Hand ergriffenen Handhabe.

Alternativ kann die langgestrecke Handhabe auch um eine quer zur Verschiebungsrichtung der Trägerschiene verlaufende Achse verschwenkbar auf der Halterungsschiene gelagert sein, wobei dann ihr lagerseitiges Ende durch wenigstens ein durch einen Durchbruch in der Stegfläche der Halterungsschiene geführtes Koppelglied mit der Trägerschiene verbunden ist. In diesem Fall erfolgt die Ver- bzw. Entriegelung des Türflügels mit dem Gehäuse also durch eine Verschwenkung der Handhabe.

In einer weiteren abgewandelten Ausgestaltung kann die langgestreckte Handhabe auch drehfest am äußeren Ende eines drehbar in der Halterungsschiene gelagerten Lagerbolzens angeordnet sein, dessen halterungsschieneninneres Ende über einen Getriebemechanismus mit der Trägerschiene derart gekoppelt ist, dass die Trägerschiene bei einer Verdrehung der Handhabe um den vorgegebenen Weg in die bzw. aus der Verriegelungsendstellung verschoben wird. Hier ist beispielsweise an eine Koppelung durch ein am inneren Ende des Lagerbolzens angeordnetes Ritzel zu denken, welches mit einer zahnstangenartigen Verzahnung an der Trägerschiene in Eingriff steht.

Die Erfindung ist nachstehend in Verbindung mit der Zeichnung näher erläutert und zwar zeigt:
Fig. 1 eine Ansicht auf die Frontseite eines Feldes einer in der erfindungsgemäßen weiter ausgebildeten Mittelspannungs-Schaltanlage;
Fig. 2 eine Schnittansicht gesehen Richtung der Pfeile 2-2 in Fig. 1;
Fig. 3 eine isometrische Ansicht eines der drei die frontseitig offenen Räume des in den Fig. 1 und 2 gezeigten Feldes verschließenden Türflügels;
Fig. 4 eine Ansicht der Außenseite des Türflügels gesehen Richtung des Pfeils 4 in Fig. 3;
Fig. 5 eine Ansicht auf die Innenseite des Türflügels gesehen Richtung des Pfeils 5 in Fig. 3;
Fig. 6 eine Ansicht des Türflügels gesehen des Pfeils 6 in Fig. 4;
Fig. 7 eine Ansicht auf den oberen Rand des Türflügels gesehen Richtung des Pfeils 7 in Fig. 4;
Fig. 8 den in Fig. 5 innerhalb des strichpunktierten Kreises 8 liegenden Teilabschnitts des Türflügels in vergrößertem Maßstab;
Fig. 9 den innerhalb des strichpunktierten Kreises 9 in Fig. 5 liegenden Teilabschnitts des Türflügels in vergrößertem Maßstab;
Fig. 10 eine isometrische Ansicht der am freien Rand des in den Figuren 4 bis 9 gezeigten Türflügels angeordneten einhändig betätigbaren Schließvorrichtung des Türflügels;
Fig. 11 eine Ansicht der Schließvorrichtung gesehen Richtung des Pfeils 11 in Fig. 10;
Fig. 12 eine Ansicht gesehen Richtung des Pfeils 12 in Fig. 11;
Fig. 13 eine Schnittansicht gesehen Richtung der Pfeile 13-13 in Fig. 11;
Fig. 14 eine Schnittansicht gesehen Richtung der Pfeile 14-14 in Fig. 11;
Fig. 15 eine isometrische Ansicht eines Gestängebauteils der in den Fig. 10-14 gezeigten Schließvorrichtung;
Fig. 16 eine Ansicht des Gestängebauteils gesehen Richtung des Pfeils 16 in Fig. 15;
Fig. 17 eine Ansicht gesehen Richtung des Pfeils 17 in Fig. 16; und
Fig. 18 eine Ansicht gesehen Richtung des Pfeils 18 in Fig. 16;

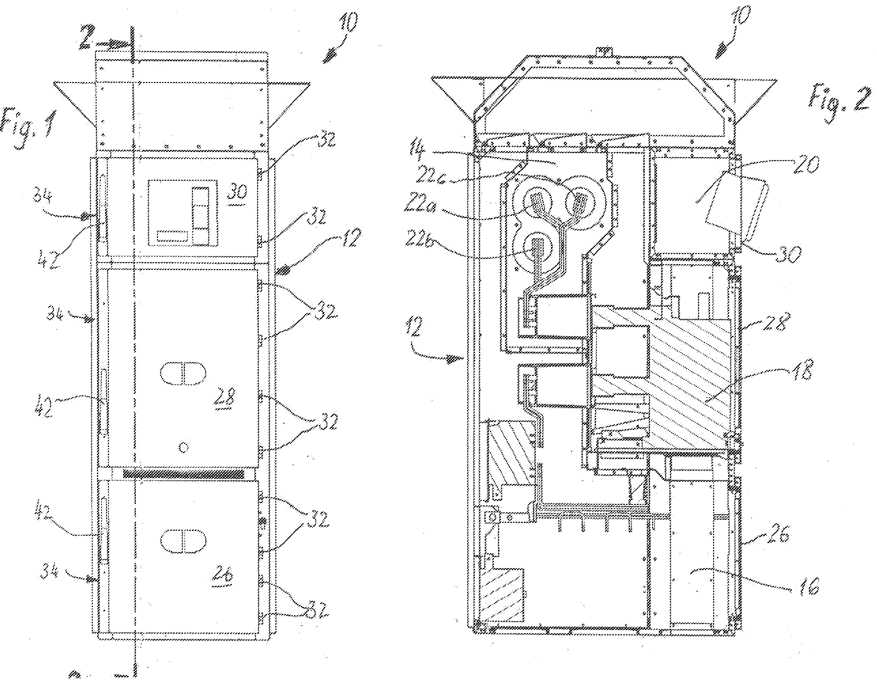

In den Fig. 1 und 2 ist ein typisches Ausführungsbeispiel eines in seiner Gesamtheit mit 10 bezeichneten Feldes einer Mittelspannungs-Schaltanlage gezeigt, welches konzeptionell durch seitlichen Anbau weiterer gleichartiger Felder modular zu einem auch an komplexe elektrische Schalt- und Verteileraufgaben anpassbaren Anlagensystem ausbaubar ist.

Das Feld 10 weist ein schrankartiges äußeres Gehäuse 12 auf, dessen Wände aus verzinkten, stabil gekanteten Stahlblechen, die zu einer verwindungssteifen Schraubkonstruktion verbunden sind. Die Schottung des Feldes 10 zu benachbarten Feldern erfolgt durch glasfaserverstärkte Kunststoff-Isolierplatten.

Das Gehäuse ist in unterschiedlichen Funktionsaufgaben zugeordnete, ihrerseits gegeneinander isolierte Räume unterteilt und zwar im vorliegenden Falle in einen im rückwärtigen oberen Bereich des Gehäuses 12 vorgesehenen Sammelschienenraum 14 und im frontseitigen Bereich jeweils einen in übereinander Anordnungen vorgesehenen Kabelanschlussraum 16, einen Leistungsschalterraum 18 und einen Niederspannungsraum 20.

Der im vorliegenden Fall von drei voneinander beabstandeten luftisolierten Sammelschienen 22a, 22b und 22c horizontal durchsetzte Sammelschienenraum weist in den benachbarten Feldern zugewandte Wände isolieren Durchführung aus geeignetem Isolierstoff aufkommen, über welche diese Sammelschienen jeweils mit den Sammelschienen in benachbarten Feldern verbindbar sind.

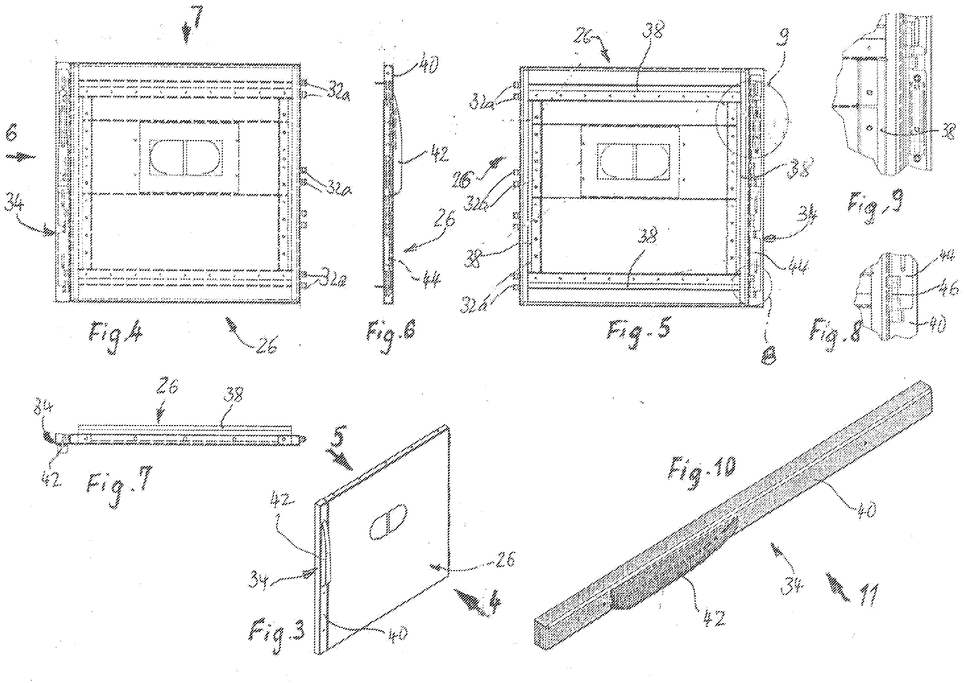

Die frontseitigen Kabelanschluss-, Leistungsschalter- und Niederspannungsräume sind jeweils durch übereinander liegende frontseitige Öffnungen im Gehäuse 12 zugänglich, welche durch entlang eines ihrer senkrechten Ränder verschwenkbar am Gehäuse angeschlagene Türflügel 26, 28, 30 störlichtbogensicher verschließbar sind. Im Bereich des dem verschwenkbar am Gehäuse 12 angeschlagenen Rands gegenüberliegenden Türflügel-Rands ist jeder Türflügel mit einer einhändig betätigbaren Öffnungs-/Schließ-Vorrichtung für den jeweiligen Türflügel versehen. Die Anordnung der Türflügel am Gehäuse und die spezielle Ausgestaltung der Türverschlusseinrichtung am Gehäuse sind nachstehend in Verbindung mit den Fig. 3 bis 18 beschrieben.

Die Türflügel 26, 28 und 30 sind jeweils an ihrem in Figur 1 senkrechten rechten Rand mindestens eine Anzahl von höhenversetzten Scharnieren 32 auf dem die Gehäuseöffnungen umgebenden Gehäusestirnflächenbereich verschwenkbar angelenkt. Am gegenüberliegenden Rand der Türflügel ist jeweils die fest mit dem Rand des jeweiligen Türflügels verbundene Öffnungs-/Schließ-Vorrichtung 34 vorgesehen, die nachstehend in Verbindung mit dem in den Figuren 3 bis 9 gezeigten, dem Kabelanschlussraum 16 zugeordneten Türflügel 26 beschrieben wird. Dabei ist darauf hinzuweisen, dass die Öffnungs-/Schließ-Vorrichtung 34 an den dem Leistungsschalterraum 18 bzw. dem Niederspannungsraum 20 zugeordneten Türflügeln 28 bzw. 30 - bis auf die erforderliche Anpassung an die unterschiedlichen Höhenabmessungen der Türflügel - funktionell entsprechend ausgebildet sind, so dass es - zur Vermeidung unnötiger Wiederholungen - genügt die am Türflügel 26 vorgesehene Öffnungs-/Schließ-Vorrichtung 34 zu beschreiben.

Der in Figur 4 mit Blickrichtung auf die Außen- und in Figur 5 mit Blickrichtung auf die Innenseiten dargestellte Türflügel 26 ist auf der zum Gehäuse 12 weisenden Innenseite mit rechtwinklig zu den die Türflügelöffnung umgebenden Gehäusestirnflächenbereichen vortretenden umlaufenden metallischen Leisten 38 versehen, welchen entsprechende - nicht gezeigte - rechtwinklig von den Gehäusestirnflächenbereichen vortretenden metallische Leisten zugeordnet sind, die in ihrer Anordnung etwas in Richtung zur Türflügelöffnung im Gehäuse versetzt sind, so dass die Türflügel- und Gehäuseleisten bei geschlossenem Türflügel eine Störlichtbogensicherung nach Art einer Labyrinthdichtung zum Schutz von den Türflügel öffnenden bzw. schließenden Bedienungspersonen bilden.

Die Öffnungs-/Schließ-Vorrichtung 34 weist eine langgestreckte im Querschnitt U-förmige äußere Halterungsschiene 40 auf, welche mit ihrer offenen zum Gehäuse-Stirnwandbereich weisenden Seite durch Verschweißen oder Vernieten unlösbar am seitlichen Rand des Türflügels 26 befestigt ist. Die Länge der Halterungsschiene 40 entspricht der Länge des seitlichen Randes des Türflügels 26, so dass sie sich als Teil des Türflügels 26 darstellt.

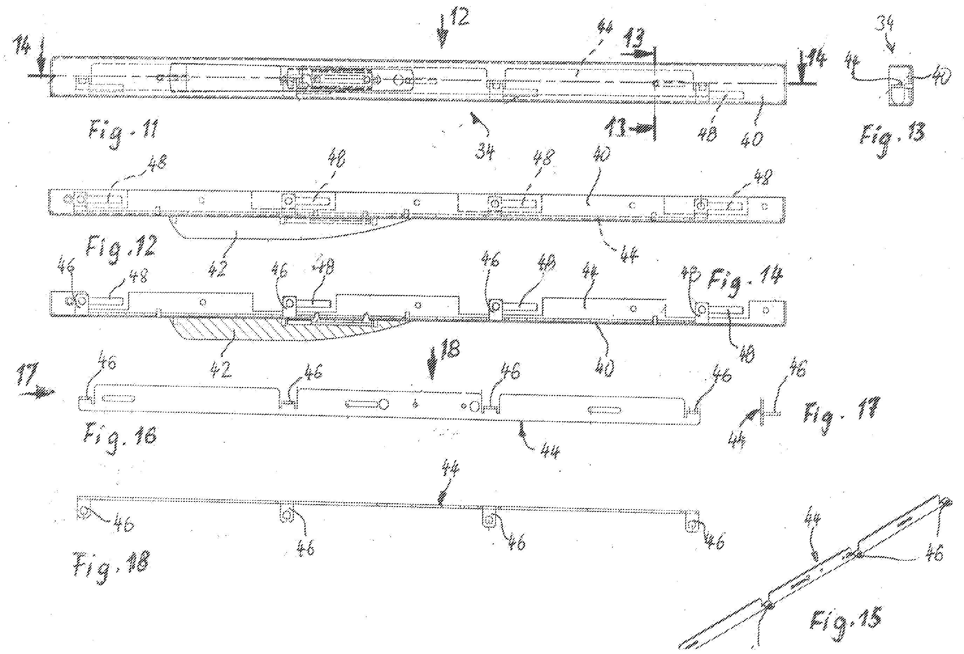

Auf der äußeren Fläche der Stegwand der Halterungsschiene 40 ist eine langgestreckte Handhabe 42 zwischen zwei Endstellungen beweglich und zwar im dargestellten Fall in Halterungsschienenlängsrichtung verschieblich. Die von einer die Handhabe ergreifenden Bedienungsperson ausgeübte Verschwenkung der Handhabe wird durch eine zugeordnete Öffnung in Form eines Längsschlitzes in der Stegfläche der Halterungsschiene 40 über Verbindungsbolzen auf eine an der inneren Flachseite der Stegfläche der Halterungsschiene 40 anliegende, um das durch die Länge des Längsschlitzes vorgegebenes Maß längverschieblich gehalterte Trägerschiene 44 übertragen. Die Halterung der in den Figuren 15 bis 18 gesondert dargestellten Trägerschiene 44 in der Halterungsschiene 40 ist den Figuren 11 bis 14 dargestellt.

Die Trägerschiene 44 weist im dargestellten Fall insgesamt vier in Längsrichtung voneinander beabstandete von aus dem Material der Trägerschiene 44 freigeschnittenen und rechtwinklig umgekanteten Lappen 46 gebildete Träger auf, an den jeweils das eine Ende eines parallel zur und in Längsrichtung der Trägerschiene verlaufenden Verriegelungsbolzens 48 (Figuren 12 und 14) befestigt ist. Den Verriegelungsbolzen 48 sind auf der gegenüberliegenden, die Türflügelöffnung des Gehäuses 12 seitlich begrenzenden Gehäuse-Stirnfläche angeordnete vortretende hülsenförmige Bolzenaufnahmen zugeordnet, die in der Zeichnung nicht dargestellt sind. Durch Verschieben der Trägerschiene 44 durch entsprechende Bewegung der Handhabe 42 sind die Verriegelungsbolzen 48 wahlweise in die hülsenförmigen Bolzenaufnahmen einschieb- bzw. aus ihnen zurückziehbar, wodurch also eine Verriegelung des Türflügels 26 an vier über die Höhe des Gehäuses verteilte Positionen durch Eingriff der Verriegelungsbolzen 48 in die - nicht dargestellten - Bolzenaufnahmen möglich ist.

Höhenmäßig ausgerichtet zu den Bolzenaufnahmen sind auf dem gegenüberliegenden Rand des Türflügels 26 jeweils die Scharniere 32 angeordnet, mittels derer der Türflügel 26 verschwenkbar am Gehäuse 12 gelagert ist. Die Festlegung des geschlossenen Türflügels 26 auf dem Gehäuse 12 erfolgt also in der Türflügel-Schließstellung an jedem senkrechten Rand des Türflügels an vier, insgesamt also acht höhenversetzten Punkten, so dass in jedem Falle sichergestellt ist, dass sich der geschlossene Türflügel 26 auch bei plötzlich auftretenden Drucksteigerungen im Gehäuseinnern, z. B. durch bei eventuellen Kurzschlüssen o. dgl. entstehende Lichtbögen nicht unerwartet und plötzlich öffnen kann.

Es ist ersichtlich, dass anstelle der vorstehenden Verbindung mit den dargestellten Ausführungsbeispielen beschriebenen Kopplung der Handhabe 42 mit der Trägerschiene 44 durch eine direkte Befestigung mittels einer Schlitzförmige Öffnung in der Halterungsschiene 40 durchsetzende Verbindungsmittel die Kopplung der Handhabe auch so erfolgen kann, dass die Handhabe 42 um eine quer zur Verschiebungsrichtung der Trägerschiene verlaufende Achse verschwenkbar auf der Außenseite der Halterungsschiene 40 gelagert ist, wobei dann ihr lagerseitiges Ende durch geeignete durch die Stegfläche der Halterungsschiene geführte getriebliche Koppelungsglieder mit der Trägerschiene 44 verbunden wird. Auch eine Ausbildung, über welche die langgestreckte Handhabe drehfest am äußeren Ende eines drehbar in der Halterungsschiene gelagerten Lagerbolzens angeordnet ist, kommt in Frage, wobei dann das ins Innere der Halterungsschiene geführte Ende des Lagerbolzens über einen Getriebemechanismus mit der Trägerschiene gekoppelt wird, welcher die Trägerschiene 44 bei einer Verdrehung der Handhabe um den vorgegebenen Weg in die bzw. aus der Verriegelungsendstellung verschiebt. Hier kommt beispielsweise die Anordnung eines Zahnritzels am halterungsschieneninneren Ende des Lagerbolzens in Frage, dessen Verzahnung mit einem an der Trägerschiene 44 ausgebildeten Zahnstangenabschnitt in Eingriff steht.

Es ist festzuhalten, dass die vorstehend beschriebene Ausgestaltung der Öffnungs-/Schließvorrichtung 34 des den Kabelanschlussraum 16 verschließenden Türflügel 26 in funktionell entsprechender Weise auch für den den Leistungsschalterraum 18 verschießenden Türflügel 28 und den den Niederspannungsraum 20 verschließenden Türflügel 30 eingesetzt werden kann.

## Patentansprüche

1. Luftisolierte Mittelspannungs-Schaltanlage aus modular zusammenstellbaren und miteinander verbindbaren metallisch gekapselten und geschotteten Feldern (10) mit jeweils einem schrankartigen Gehäuse (12) aus Metallblech, in denen jeweils eine Anzahl von unterschiedlichen Funktionseinheiten zugeordnete getrennte zumindest zum Teil frontseitig offenen Räume (16; 18; 20) gebildet sind, die durch jeweils zugeordnete vom Bedienungspersonal gesondert zu öffnende oder zu schließende, verschwenkbar am Gehäuse angelenkte metallische Türflügel (26; 28; 30) zugänglich sind, **dadurch gekennzeichnet, dass** die Türflügel (26; 28; 30) und das Gehäuse (12) in den sich in der Schließstellung jeweils gegenüberstehenden Randbereichen voneinander beabstandete parallel verlaufende, abwechselnd rechtwinklig von den Innenseiten der jeweiligen Türflügel- und dem die Türflügelöffnung im Gehäuse umschließenden Gehäusestirnflächenbereichen vortretende, umlaufende metallische Leisten (38) vorgesehen sind, welche in der Türflügelschließstellung für den jeweiligen Raum eine umlaufende Störlichtbogensicherung nach Art einer Labyrinthdichtung bilden, dass in dem dem schwenkbaren am Gehäuse (12) angelenkten Rand des jeweiligen Türflügels (26; 28; 30) gegenüberliegenden Türflügel-Randbereich zu den das Labyrinth bildenden vortretenden Leisten nach außen versetzt eine um einen vorgegebenen Weg längsverschiebliche Trägerschiene (44) für eine Anzahl von in Schienenlängsrichtung zueinander versetzte Verriegelungsbolzen (48) angeordnet ist, welche durch eine auf der Außenseite des Türflügels angeordnete mit der Trägerschiene (44) gekoppelte Handhabe (42) zwischen den Endpositionen des vorgegebenen Verschiebungswegs verschiebbar ist, und dass im zugeordneten Stirnflächenbereich des Gehäuses (12) eine der Anzahl und dem Abstand der Verriegelungsbolzen (48) entsprechende Anzahl von Bolzenaufnahmen derart positioniert angeordnet sind, dass die Verriegelungsbolzen (48) in der einen Verschiebungsendstellung der Trägerschiene (44) in die zugeordneten Bolzenaufnahmen eingreifen, in der anderen Verschiebungsendstellung jedoch aus dem Eingriff mit die zugeordneten Bolzenaufnahmen zurückgezogen sind.

2. Mittelspannungs-Schaltanlage nach Anspruch 1, **dadurch gekennzeichnet, dass** die mit den Verriegelungsbolzen (48) versehene Trägerschiene (44) in einer im Querschnitt im Wesentlichen U-förmigen langgestreckten Halterungsschiene (40) längsverschieblich angeordnet ist, welche mit ihrer zwischen den U-Schenkeln gebildeten offenen Seite in der Türflügel-Schließstellung zum Gehäuse (12) weisend an dem dem schwenkbar am Gehäuse gelagerten Rand des Türflügels (26; 28; 30) gegenüberliegenden Rand des Türflügels angeordnet ist.

3. Mittelspannungs-Schaltanlage nach Anspruch 2, **dadurch gekennzeichnet, dass** die Halterungsschiene (40) sich über die gesamte Länge des Rands des Türflügels (26; 28; 30) erstreckt, dass auf der bei geschlossenem Türflügel vom Gehäuse wegweisenden Außenfläche des Stegs der Halterungsschiene (40) eine langgestreckte hebelartige Handhabe (42) zwischen zwei Endstellungen beweglich angeordnet ist, und dass die Handhabe getrieblich mit der Trägerschiene (44) gekoppelt ist.

4. Mittelspannungs-Schaltanlage nach Anspruch 3, **dadurch gekennzeichnet, dass** die langgestreckte Handhabe (42) auf der Stegfläche der Halterungsschiene (40) längsverschieblich angeordnet und durch einen Längsschlitz in der Stegfläche hindurch mit der Trägerschiene (44) verbunden ist, wobei die Länge des Längsschlitzes entsprechend dem vorgegebenen Verschiebungsweg der Trägerschiene (44) zwischen deren Endpositionen bemessen ist.

5. Mittelspannungs-Schaltanlage nach Anspruch 3, **dadurch gekennzeichnet, dass** die langgestreckte Handhabe (42) um eine quer zur Verschiebungsrichtung der Trägerschiene (44) verlaufende Achse verschwenkbar in der Halterungsschiene (40) gelagert ist und dass ihr lagerseitiges Ende durch wenigstens ein durch einen Durchbruch in der Stegfläche der Halterungsschiene (40) geführtes Koppelglied mit der Trägerschiene (44) verbunden ist.

6. Mittelspannungs-Schaltanlage nach Anspruch 3, **dadurch gekennzeichnet, dass** die langgestreckte Handhabe (42) drehfest am äußeren Ende eines drehbar in der Halterungsschiene (40) gelagerten Lagerbolzens angeordnet ist, und dass das gegenüberliegende halterungsschieneninnere Ende des Lagerbolzens über einen Getriebemechanismus mit der Trägerschiene (44) derart gekoppelt ist, dass die Trägerschiene (44) bei einer Verdrehung der Handhabe (42) um den vorgegebenen Weg in die bzw. aus der Verriegelungs-Endstellung verschoben wird.

## Claims

1. Air-insulated medium-voltage switching assembly of metal-encapsulated and partitioned areas (10) which can be arranged in a modular fashion and are connectable to one another each having a cabinet-like housing (12) of sheet metal, in which in each case a number of separate chambers (16;18;20) assigned to different functional units and at least partially open to the front are formed, which are accessible via in each case assigned metal door wings (26; 28; 30) pivotably hinged to the housing and to be opened or closed separately by operating staff, **characterized in that** in the edge regions, in each case opposite to one another in the closed position, circumferential metal ledges (38) are provided spaced apart and running in parallel and alternatingly projecting rectangularly from the inner surfaces of the respective door wing opening and from the housing front face regions enclosing the door wing opening in the housing are provided for the door wings (26; 28; 30) and the housing (12), which form a circumferential fault arc protection in the type of a labyrinth seal for the respective chamber in the closed position of the door wings, **in that** a support rail (44) longitudinally displaceable by a certain path for a number of locking bolts (48) shifted to one another in the longitudinal direction of the rail is arranged offset outward with respect to the projecting ledges forming the labyrinth in the door wing edge region opposite the pivotable edge of the respective door wing hinged to the housing (12), which support rail is displaceable between the end positions of the predetermined displacement path via a handle (42) arranged on the outer surface of the door wing and coupled to the support rail, and **in that** a number of bolt receptions corresponding to the number and the distance of the locking bolts (48) is arranged positioned in the assigned front face region of the housing (12) in such a way that the locking bolts (48) engage the assigned bolt receptions in the one displacement end position of the support rail (44), however are withdrawn from engagement with the assigned bolt receptions in the other displacement end position.

2. Medium-voltage switching assembly according to claim 1, **characterized in that** the support rail (44) provided with the locking bolts (48) is arranged displaceable in the longitudinal direction in an elongated mounting rail (40) substantially U-shaped in the cross-section which is arranged on the edge of the door wing opposite the edge of the door wing (26; 28; 30) pivotably supported on the housing with its open side formed between the U-shaped legs facing the housing (12) in the closed position of the door wings.

3. Medium-voltage switching assembly according to claim 2, **characterized in that** the mounting rail (40) extends over the entire length of the edge of the door wing (26; 28; 30), **in that** on the outer surface of the web of the mounting rail (40) facing away from the housing with door wings closed an elongated, lever-like handle (42) is arranged moveably between two end positions, and **in that** the handle is gear-coupled to the support rail (44).

4. Medium-voltage switching assembly according to claim 3, **characterized in that** the elongated handle (42) is arranged displaceable in the longitudinal direction on the web surface of the mounting rail (40) and is connected to the support rail (44) through a longitudinal slot in the web surface, wherein the length of the longitudinal slot is dimensioned corresponding to the predetermined displacement path of the support rail (44) between the end positions thereof.

5. Medium-voltage switching assembly according to claim 3, **characterized in that** the elongated handle (42) is supported pivotable around an axis running transversely to the displacement direction of the support rail (44) in the mounting rail (40), and **in that** the support-side end of the handle is connected to at least one coupling member guided through an aperture in the web surface of the mounting rail (40).

6. Medium-voltage switching assembly according to claim 3, **characterized in that** the elongated handle (42) is arranged rotationally fixed on the outer end of a support bolt rotationally supported in the mounting rail (40), and **in that** the opposite end of the support bolt located inside the mounting rail is coupled to the support rail (44) via a gear mechanism in such a way that the support rail (44) is displaced into or from the locking end position by the predetermined path when twisting the handle (42).

## Revendications

1. Installation de commutation à tension moyenne, isolée à l'air, constituée de champs (10) à blindage métallique et cloisonnés, pouvant être assemblés de manière modulaire et reliés entre eux, comprenant respectivement un boîtier (12) en forme d'armoire, en tôle métallique, dans lesquels respectivement un nombre d'espaces (16 ; 18 ; 20) ouverts, séparés au moins en partie côté frontal, attribués à des unités fonctionnelles différentes sont formés, lesquels sont accessibles par des battants de porte (26 ; 28 ; 30) métalliques respectivement associés, articulés de manière pivotante sur le boîtier, à ouvrir ou fermer de manière séparée par le personnel de commande, **caractérisée en ce que** pour les battants de porte (26 ; 38 ; 30) et le boîtier (12), dans les zones de bord respectivement opposées en position de fermeture, des baguettes (38) métalliques périphériques, distancées les unes des autres, s'étendant parallèlement, en alternance en angle droit par rapport aux côtés intérieurs de l'ouverture respective du battant de porte et aux zones de surface frontale du boîtier entourant l'ouverture de battant de porte dans le boîtier, sont ménagées, lesquelles, dans la position de fermeture du battant de porte, forment pour l'espace respectif une sécurité périphérique contre les arcs de lumière parasitaire à la façon d'un joint labyrinthe, **en ce que** dans la zone de bord du battant de porte, opposée au bord du battant de porte respectif (26 ; 28 ; 30) articulé de manière pivotante sur le boîtier (12), un rail porteur (44) coulissant dans le sens longitudinal d'un trajet prédéfini est disposé vers les baguettes en saillie formant le labyrinthe, de manière décalée vers l'extérieur, pour un nombre de boulons de verrouillage (48) décalés les uns par rapport aux autres dans le sens longitudinal du rail, lequel est coulissant entre les positions finales du trajet de déplacement prédéfini au moyen d'une poignée (42) disposée sur le côté extérieur du battant de porte, couplée au rail porteur (44), et **en ce que** dans la zone de surface frontale correspondante du boîtier (12), un nombre de logements de verrouillage correspondant au nombre et à l'écart des boulons de verrouillage (48) sont disposés en étant positionnés de manière à ce que les boulons de verrouillage (48), dans l'une position finale de déplacement du rail porteur (44), aient prise dans les logements de boulons correspondants, à ce que, dans l'autre position finale de déplacement, ils soient cependant retirés de la prise avec les logement de boulons correspondants.

2. Installation de commutation à tension moyenne selon la revendication 1, **caractérisée en ce que** le rail porteur (44) muni des boulons de verrouillage (48) est disposé de manière déplaçable en longueur dans un rail de support (40) allongé, essentiellement en forme de U en section transversale, lequel est disposé, avec son côté ouvert formé entre les côtés en U en position de fermeture du battant de porte, tourné vers le boîtier (12), sur le bord du battant de porte opposé au bord du battant de porte (26 ; 28 ; 30) logé de manière pivotante sur le boîtier.

3. Installation de commutation à tension moyenne selon la revendication 2, **caractérisée en ce que** le rail de support (40) s'étend sur toute la longueur du bord du battant de porte (26 ; 28 ; 30), **en ce que** sur la surface extérieure de la nervure du rail de support (40), détournée du boîtier lorsque le battant de porte est fermé, une poignée (42) allongée en forme de levier est disposée de manière déplaçable entre deux positions finales, et **en ce que** la poignée est couplée au rail de support (44) par un engrenage.

4. Installation de commutation à tension moyenne selon la revendication 3, **caractérisée en ce que** la poignée (42) allongée est disposée de manière déplaçable en longueur sur la surface de nervure du rail de support (40) et est reliée au rail porteur (44) au moyen d'une fente longitudinale à travers la surface de nervure, la longueur de la fente longitudinale étant dimensionnée de manière correspondant au trajet de déplacement prédéfini du rail porteur (44) entre ses position finales.

5. Installation de commutation à tension moyenne selon la revendication 3, **caractérisée en ce que** la poignée (42) allongée est logée dans le rail de support (40) de manière pivotante autour d'un axe s'étendant transversalement au sens de déplacement du rail porteur (44) et **en ce que** son extrémité côté palier est reliée au rail porteur (44) au moyen d'au moins un organe de couplage guidé à travers un passage dans la surface de nervure du rail de support (40).

6. Installation de commutation à tension moyenne selon la revendication 3, **caractérisée en ce que** la poignée (42) allongée est disposée de manière solidaire en rotation sur l'extrémité extérieure d'un boulon de palier logé de manière rotative dans le rail de support (40), et **en ce que** l'extrémité du boulon de palier, opposée, intérieure au rail de support, est couplée au rail porteur (44) par l'intermédiaire d'un mécanisme d'engrenage de manière à ce que le rail porteur (44), lors d'une rotation de la poignée (42) du trajet prédéfini, soit poussé dans ou hors de la position finale de verrouillage.
